# EUROPÄISCHE PATENTSCHRIFT

(11) **EP 3 032 992 B1**
(45) Veröffentlichungstag und Bekanntmachung des Hinweises auf die Patenterteilung: **23.10.2019**
(21) Anmeldenummer: 14742534.2
(22) Anmeldetag: 25.07.2014
(51) Int. Cl.: A47J 43/07, B01F 7/00

(54) **RÜHRWERKZEUG FÜR EIN KÜCHENGERÄT**
STIRRING TOOL FOR A KITCHEN APPLIANCE
OUTIL MÉLANGEUR POUR APPAREIL DE CUISINE

(30) Priorität: 14.08.2013 DE 102013216089
(43) Veröffentlichungstag der Anmeldung: 22.06.2016
(73) Patentinhaber: BSH Hausgeräte GmbH, 81739 München (DE)
(72) Erfinder: BRECKO, Ales, 3000 Celje (SI); CATER, Matej, 3301 Petrovce (SI); JAKSE, Ales, 3000 Celje (SI)
(86) Internationale Anmeldenummer: PCT/EP2014/066001
(87) Internationale Veröffentlichungsnummer: WO 2015/022169

(56) Entgegenhaltungen:
- WO-A2-2008/008631
- US-A- 1 612 281
- US-A1- 2006 171 251
- US-A1- 2006 268 659
- US-A1- 2012 081 993
- US-A1- 2012 120 755

## Beschreibung

### Gebiet der Erfindung

Die Erfindung betrifft ein Rührwerkzeug für ein Küchengerät, wobei das Rührwerkzeug wenigstens eine Halteeinrichtung, einen Rahmen und einen elastischen Funktionsbereich aufweist. Der elastische Funktionsbereich ist mit dem Rahmen verbunden. Das Rührwerkzeug ist zum Rühren von fließfähigem Gut und/oder zum Abstreifen des fließfähigen Guts von Flächen vorgesehen und/oder geeignet.

### Hintergrund der Erfindung

Manuell oder elektrisch betriebene Küchengeräte können je nach Ausführung unterschiedliche Aufgaben erfüllen. Beispielsweise können Küchengeräte zum Mischen verschiedener Zutaten für diverse Vor- oder Endprodukte für Speisen und Lebensmittel oder für Backprodukte verwendet werden, sowie zum Kneten von Teig für Brot, Brötchen oder andere Backwaren. Für derartige Aufgaben können Mixer oder Multifunktionsgräte als Küchengeräte eingesetzt werden. Oft werden verschiedene Aufsätze, z. B. Steckeinsätze, für Basismodule verwendet. Basismodule können elektrisch betriebene und manuell führbare Geräte oder größere und kompaktere Standgeräte sein. Letztere sind beispielweise für größere Verarbeitungsvolumen, für leistungsstärkere und damit schwere Geräte oder aus Gründen der Handhabung für einen sicheren Stand auf Küchenplatten geeignet.

Die Offenlegungsschrift WO 2006/083560 A2 beschreibt ein Rührblatt für einen Mixer mit einer Antriebswelle sowie eine Vorrichtung zum Befestigen des Rührblatts an der Antriebswelle. Das Rührblatt ist mit einer zweiseitigen Symmetrie in Bezug auf die Antriebswelle ausgeführt und weist einen Ansatz mit einer Vorrichtung zum Abstreifen einer Oberfläche auf. Der Ansatz ist eine elastische Ummantelung, die mit dem Rührblatt verbunden ist. Die Vorrichtung zum Abstreifen zeigt eine Vielzahl von beabstandeten Finnen ("Fins") auf der Ummantelung.

Die Patentanmeldung GB 2470914 A beschreibt ein Rührwerkzeug für einen Standmixer mit Planetenantrieb. Das Rührwerkzeug weist eine Rahmenstruktur mit einer zentralen Stütze auf, die an einem ersten Ende eine wieder lösbare Verbindung mit dem Planetenantrieb vorsieht, und an ihrem zweiten Ende zwei geschwungene, symmetrische und U-förmige Arme aufweist. Jeder dieser Arme weist weiterhin eine aufziehbare Umhüllung auf, die als ein blatt- oder flügelartiges Wischprofil für Oberflächen ausgeführt ist.

Die Patentanmeldung WO 2011/141690 A1 offenbart eine Rühreranordnung zum Rühren von Zutaten in einer Schüssel, wobei der Rührer von einem Planetenantrieb eines Standmixers angetrieben wird. Die Rühranordnung umfasst einen ersten und einen zweiten Ausleger zum Eintauchen in die Schüssel, wobei jeder Ausleger zum Nachführen des oberen Teils der Oberfläche der Schüssel ausgestaltet ist.

### Der Erfindung zugrundeliegende Aufgabe

Der Erfindung liegt die Aufgabe zugrunde, ein verbessertes Rührwerkzeug bereitzustellen. Insbesondere soll es mit dem Rührwerkzeug möglich sein, ein Abstreifen eines fließfähigen Guts von Flächen zu verbessern und die Vermischung des fließfähigen Guts zu verbessern.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch ein Rührwerkzeug, das wenigstens eine Halteeinrichtung, einen Rahmen und einen elastischen Funktionsbereich aufweist. Der elastische Funktionsbereich ist mit dem Rahmen verbunden, und das Rührwerkzeug ist zum Rühren von fließfähigem Gut vorgesehen und ausgestaltet. Weiterhin ist das Rührwerkzeug zum Abstreifen des fließfähigen Guts von Flächen vorgesehen. Der elastische Funktionsbereich weist eine wellenförmige Kontur auf, wobei das Rührwerkzeug die wellenförmige Kontur zumindest vor einer nutzungsgemäßen Erstbenutzung aufweist. Dies bedeutet, das Rührwerkzeug wird mit einer erfindungsgemäßen wellenförmigen Kontur hergestellt, die sich jedoch nach einer Erstbenutzung und im weiteren vorgesehenen Gebrauch verändern kann.

Erfindungsgemäß ist wenigstens eine Komponente der Amplitude der wellenförmigen Kontur in Richtung der Flächennormalen des angrenzenden Teils des Rahmens ausgebildet. Das bedeutet, dass die Amplitude auch einen Anteil in der Ebene des Rahmens aufweisen kann. Vorzugsweise ist jedoch der überwiegende Anteil der Amplitude, besonders vorzugsweise die gesamte Amplitude, in Richtung der Flächennormalen des Rahmens ausgebildet.

Insbesondere ist die Wellenform in Form sinusförmiger Wellen ausgeprägt.

Das Rührwerkzeug kann neben der Halteeinrichtung, dem Rahmen und dem elastischen Funktionsbereich weitere Teile aufweisen, wie beispielsweise einen oder mehrere Adapter für weitere Küchengeräte, Schrauben oder andere Kleinteile zum Verbinden der jeweiligen Einzelteile, Funktionsaufsätze für spezielle zu rührende oder zu mischende Lebensmittel.

Die Erfindung nutzt unter anderem aus, dass durch die erfindungsgemäße wellenförmige Kontur das Verhältnis zwischen Rührergebnis und erforderlicher Rührzeit verbessert werden kann. Insbesondere ist es mit der Erfindung erreichbar, dass für das gleiche Rührergebnis eine geringere Rührzeit erforderlich ist. Ohne auf eine bestimmte Theorie festgelegt werden zu wollen, vermuten die Erfinder, dass dieser Effekt wenigstens zum Teil auf eine aufgrund der Wellenform der Kontur verlängerte Umfangslinie des Funktionsbereichs zurückgeführt werde kann. Die Erfinder vermuten, dass eine Wirbelbildung an der Kontur zur Qualität des Rührergebnisses beiträgt und die längere Kontur auch eine vermehrte Wirbelbildung nach sich zieht.

Darüber hinaus kann die erfindungsgemäße wellenförmige Kontur bei längerem Gebrauch des Rührwerkzeugs auch ästhetische Vorteile bieten. Insbesondere haben die Erfinder festgestellt, dass ein Rührwerkzeug mit einer bei der nutzungsgemäßen Erstbenutzung flachen, also nicht wellenförmigen Kontur eines elastischen Funktionsbereichs nach einer längeren Nutzung im Rahmen eines vorgesehenen Einsatzes des Rührwerkzeugs eine dauerhaft unregelmäßig geformte Kontur des elastischen Funktionsbereichs aufweisen kann. Nach Erkenntnis der Erfinder können Kräfte und Verformungen während des Gebrauchs von Rührwerkzeugen mit einem elastischen Funktionsbereich zu unregelmäßigen dauerhaften Verformungen des elastischen Bereichs führen, z. B. während eines Einsatzes des Rührwerkzeugs zum Abstreifen beispielsweise von Teig oder einem Zutatengemisch für eine Speisenzubereitung von einer Mischbehälterwandung oder bei einem Misch- oder Knetvorgang mit dem Rührwerkzeug Durch die erfindungsgemäß bereits durch die Herstellung der Rührwerkzeug angebrachte wellenförmige Kontur des elastischen Funktionsbereichs kann , wie die Erfinder festgestellt haben, einer gebrauchsbedingte unregelmäßige Verformung des elastischen Funktionsbereichs entgegengewirkt werden oder deren Effekt durch diese bereits zu Beginn vorhandene Wellenform zumindest kaschiert werden. Insbesondere kann der Eindruck einer vermeintlichen Abnutzung, die von einem Nutzer herkömmlicher Rührwerkzeuge mit geraden elastischen Funktionsbereichen bei einer gebrauchsbedingten Verformung oftmals entsteht, mit der Folge eines unnötigen Austausches des Rührwerkzeugs, vorteilhaft vermieden werden.

Die Erfindung eignet sich insbesondere für den Einsatz in Küchengeräten wie beispielsweise Multifunktionsgeräten. Mit derartigen Multifunktionsgeräten können neben Rührwerkzeugen auch weitere Werkzeuge, z. B. Rührstäbe, Quirle oder Messerblätter nutzbar sein. Mithilfe der wellenförmigen Kontur des elastischen Funktionsbereichs können mit dem Rührwerkzeug besonders vorteilhaft Reste von Speisen, Teigmischungen oder anderer zu rührender Substanzen von den Wänden in Mischbehältern abgestreift oder abgeschabt werden.

Das erfindungsgemäße Rührwerkzeug ist insbesondere die Verwendung mit elektrischen Küchengeräten vorgesehen. Das Rührwerkzeug wird dabei insbesondere mittels eines Elektromotors und gegebenenfalls eines Getriebes in Rotation versetzt. Diese Rotationen können einfache Drehungen oder spezielle Kreisel- oder dreidimensionale Kurvenbewegungen sein, die an eine Gefäßinnenwandung oder einen Mischbehälter angepasst sind.

Als fließfähiges Gut können verschiedene Lebensmittel, Zutaten, Speisen oder ähnliches zur Anwendung kommen, wie beispielsweise Teige einschließlich Kuchenteig und Brotteig, Vor-, Haupt- oder Nachspeisenmischungen usw.

Der Rahmen des Rührwerkzeugs ist erfindungsgemäß mit dem elastischen Funktionsbereich verbunden, beispielsweise mittels einer Klebeverbindung oder durch mechanisches Zusammenfügen mittels Aufschieben oder Aufstecken. Die Verbindung kann wieder lösbar oder nicht wieder lösbar sein.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Die Amplitude der wellenförmigen Kontur bedeutet in im Sinne der vorliegenden Erfindung die Höhe der Kontur ausgehend von einer Mittellinie oder Nulllinie in Richtung des Wellenverlaufs bis zur maximalen Höhe oder Spitze der Welle senkrecht zur Mittellinie. Als Amplitude kann auch als die maximale Auslenkung einer Welle aus der Mittellage bezeichnet werden.

Die Fläche des Rahmens wird dabei durch die Struktur oder Kontur des Rahmens gebildet oder aufgespannt. Diese Fläche kann eben sein oder eine dreidimensionale Flächenkontur im Raum, z. B. eine Wölbung, aufweisen. Die bevorzugte Fläche ist eben aufgespannt. Im Bereich der Verbindung des Rahmens mit dem elastischen Funktionsbereich wird eine einzige Flächennormale des Rahmens definiert, die senkrecht zu der Fläche in diesem Bereich ausgebildet ist. In dieser Ausführungsform der Erfindung sind die Amplituden der wellenförmigen Kontur in Richtung dieser einzigen Flächennormalen ausgebildet.

Die Höhe der Amplituden der wellenförmigen Kontur kann über die gesamte Kontur einheitlich sein, oder sie kann entlang des Verlaufs der Kontur variieren. In einer bevorzugten Ausführung ist zumindest die Amplitude der Konturkomponente, die senkrecht zur Flächennormalen des Rahmens ausgebildet ist, einheitlich über die gesamte Kontur. Eine einheitliche Amplitude kann vorteilhaft sein, um einen homogenen Mischvorgang zu erzeugen oder ein gleichmäßiges Abstreifen eines fließfähigen Guts von einer Wand zu erzielen.

Die Wellenlänge der wellenförmigen Kontur kann über die gesamte Kontur einheitlich sein, oder sie kann entlang des Verlaufs der Kontur variieren. In einer bevorzugten Ausführungsform der Erfindung ist die Wellenlänge der wellenförmigen Kontur einheitlich über die gesamte Kontur. Eine einheitliche Wellenlänge kann vorteilhaft sein, um einen homogenen Mischvorgang zu erzeugen oder ein gleichmäßiges Abstreifen eines fließfähigen Guts von einer Wand zu erzielen.

Die wellenförmige Kontur ist vorzugsweise zumindest abschnittsweise, besonders vorzugsweise über den gesamten Verlauf der Kontur im mathematischen Sinne glatt, also ohne scharfe spitzen. Besonders vorzugsweise setzt sich der Verlauf der Kontur aus Bogenabschnitten zusammen, z.B. kann sie im Wesentlichen eine Sinuskurve sein. Die Durchgänge der Kontur durch die Mittellinie sind vorzugsweise äquidistant.

In einer bevorzugten Ausführungsform der Erfindung ist das Verhältnis von Wellenlänge zu Amplitude kleiner als 40:1, besonders vorzugsweise kleiner als 30:1, besonders vorzugsweise kleiner als 20:1. Verhältnis von Wellenlänge zu Amplitude ist vorzugsweise größer als 2:1, besonders vorzugsweise größer als 4:1, besonders vorzugsweise größer als 8:1, z.B. 10:1. Im Folgenden werden rein exemplarisch Werte für Wellenlängen und Amplituden angegeben, um die Ermittlung der angegebenen Verhältnisse zu verdeutlichen. Dies ist jedoch nicht so zu verstehen, dass die Erfindung darauf beschränkt ist. Beispielsweise ist die Wellenlänge 15 mm. Dann ergibt sich bei einem Verhältnis von 20:1 eine Amplitude von 0,75 mm. Bei einem Verhältnis von 10:1 und einer Wellenlänge von 15 mm ergibt sich eine Amplitude von 1,5 mm.

In einer weiteren bevorzugten Ausführungsform variiert die Wellenlänge der wellenförmigen Kontur entlang des Verlaufs der Kontur. Die Wellenlängen können beispielsweise stetig ansteigend von einer Seite des Rührwerkzeugs zu- oder abnehmen oder unterschiedlich über die Länge der Kontur verteilt sein. Eine unterschiedliche Verteilung wäre beispielsweise eine zunächst zunehmende Wellenlänge und ab der Hälfte der gesamten Kontur eine wieder abnehmende Wellenlänge. Ebenso können die Wellenlänge über die gesamte Kontur andere oder gar keine Verteilungsmuster der Wellenlängen aufweisen. Eine jeweils zu- oder abnehmende Wellenlänge der Kontur auf zwei gegenüberliegenden Seiten des Rührwerkzeugs wäre beispielsweise vorteilhaft, um ein Abstreifen je nach einer unterschiedlichen Oberflächenkontur eines Gefäßes, in dem ein fließfähiges Gut abgestreift werden soll, zu erzielen. Mit einer kurzen Wellenlänge kann es beispielsweise möglich sein, eine höhere Kraft zum Abstreifen auf die Oberfläche auszuüben, da die Kontur des elastischen Funktionsbereichs in diesem steifer ausgebildet sein kann. Dies setzt homogene Materialeigenschaften des elastischen Funktionsbereichs voraus.

In einer wiederum weiteren bevorzugten Ausführungsform können die Materialeigenschaften des elastischen Funktionsbereichs über die Kontur unterschiedlich verteilt sein. Damit kann es vorteilhaft möglich sein, unterschiedliche Mischbedingungen und/oder unterschiedliche Abstreifbedingungen zu erzeugen. Unterschiedliche Materialeigenschaften können beispielsweise durch Zusätze bei der Fertigung erzielt werden, etwa durch chemische Zusätze oder durch Faserverstärkungen, sogenannte Kompositmaterialien.

In einer bevorzugten Ausführung der Erfindung ist die wellenförmige Kontur in mehrere voneinander getrennte Abschnitte unterteilt, vorzugsweise in zwei oder drei voneinander getrennte Anschnitte. Vorzugsweise weist das erfindungsgemäße Rührwerkzeug mehrere, voneinander getrennt elastische Funktionsbereiche auf, besonders vorzugsweise zwei oder drei voneinander getrennte elastische Funktionsbereiche, und besonders vorzugsweise weist jeder Funktionsbereich einen Abschnitt der wellenförmigen Kontur auf.

Beispielsweise kann eine erste Hälfte des elastischen Funktionsbereichs - und vorzugsweise der wellenförmigen Kontur - auf einer Seite des Rührwerkzeugs angeordnet sein und eine zweite Hälfte des elastischen Funktionsbereichs - und vorzugsweise der wellenförmigen Kontur - auf der anderen Seite des Rührwerkzeugs. Dies kann vorteilhaft sein, um ein Abstreifen von fließfähigem Gut von einer Fläche zu verbessern, da eine durchgehend lange Kontur einerseits eine höhere Kraft erfordern kann und andererseits insgesamt weniger verformbar und flexibel sein kann. Weiterhin kann eine wellenförmige Kontur in wenigstens zwei Bereichen einen Mischvorgang verbessern, da zwei Bereiche flexibler und verformbarer sind als ein durchgehender Bereich.

In einer bevorzugten Ausführungsform der Erfindung weist die wellenförmige Kontur des elastischen Funktionsbereichs des erfindungsgemäßen Rührwerkzeugs wenigstens 4, besonders vorzugsweise wenigstens 6, besonders vorzugsweise wenigstens 8, also zum Beispiel zehn Wellen auf. Bei einer Kontur mit mehreren voneinander getrennten Abschnitten weisen alle Abschnitte vorzugsweise gleich viele Wellen auf. Eine Anzahl von wenigstens zehn Wellen kann vorteilhaft sein, da beispielsweise bei einer Aufteilung von wenigstens jeweils fünf Wellen auf jeder Seite des Rührwerkzeugs ein homogenes Abstreifen und/oder ein homogenes Mischen in Behältern, die übliche Mengen zum Mischen von Zutaten für Kuchen oder zum Vermengen und Kneten von Brotteig enthalten, einfach möglich ist.

In einer bevorzugten Ausführungsform der Erfindung weist der elastische Funktionsbereich Silikon auf oder ist aus Silikon hergestellt. Silikon ist ein synthetisches Polymer und hat die chemische Bezeichnung Poly(organo)siloxan und wird häufig auch als Silikongummi bezeichnet. Auch Silikone, die Farbe oder andere Beimischungen, z. B. zum zur Beeinflussung der Elastizität des Silikons, enthalten, sind Silikone im Sinne der vorliegenden Erfindung. Aufgrund der allgemein guten Lebensmittelverträglichkeit vieler Silikone kann dieser Werkstoff vorteilhaft zum Herstellen des elastischen Funktionsbereichs des erfindungsgemäßen Rührwerkzeugs eingesetzt werden. Weiterhin weisen Silikone vorteilhaft gute elastische Eigenschaften auf, die für Anwendungen in Küchengeräten zum Rühren und Abstreifen von fließfähigem Gut besonders gut geeignet sind.

In einer bevorzugten Ausführungsform der Erfindung weist die Halteeinrichtung und/oder der Rahmen Metall auf oder ist aus Metall hergestellt. Metall als Werkstoff weist mehrere Vorteile auf. Es gibt zahlreiche Metalle, zum Teil mit Metallbeschichtungen, die geeignet sind, um in Kontakt mit Lebensmitteln verwendet werden zu können und für diesen Zweck zugelassen sind. Metalle sind kostengünstige Werkstoffe und können gut bearbeitet werden, um beispielsweise verschiedene Geometrien für Rührwerkzeuge herzustellen. Weiterhin halten Metalle verschiedenen Lastzuständen über eine lange Lebensdauer stand, wie dies für Vorrichtungen für Küchengeräte notwendig ist.

In einer anderen bevorzugten Ausführungsform weist die Halteeinrichtung und/oder der Rahmen Kunststoff auf oder ist aus Kunststoff hergestellt. Ebenso können Verbundwerkstoffe (diese werden auch als Kompositmaterialien bezeichnet), Keramiken oder andere Werkstoffe verwendet.

Die Halteeinrichtung des Rührwerkzeugs weist in einer bevorzugten Ausführungsform einen Schaft und eine Buchse auf. Die Buchse ist dabei mit dem Rahmen und dem Schaft verbunden und der Schaft ist mit dem Küchengerät verbindbar ausgestaltet. Die Verbindung der Buchse mit dem Rahmen ist insbesondere derart ausgestaltet, dass die Buchse an einem Ende einen axialen Schlitz aufweist, in den der Rahmen eingesteckt wird. Diese Verbindung kann beispielsweise geklebt oder gelötet werden. Die Verbindung der Buchse mit dem Schaft ist insbesondere derart ausgestaltet, dass die Buchse eine axiale Innenlochbohrung aufweist, in die ein passender Ansatz des Schaftes eingeführt wird. Diese Verbindung kann ebenfalls geklebt oder gelötet werden. Die genannten Ausführungsformen der Verbindungen sind für die genannten Belastungsarten des Rührwerkzeugs besonders vorteilhaft, da sie einfach, kostengünstig und dauerhaft haltbar sind. Zahlreiche andere Verbindungsarten sind gleichfalls möglich.

In einer anderen bevorzugten Ausführungsform weist der Rahmen einen äußeren Ring und einen inneren Steg auf. Der äußere Ring kann mehreckig, oval oder kombiniert mit Rundungen und abgerundeten Ecken ausgeführt sein. Der äußere Ring und der innere Steg sind geometrisch konstruktiv insbesondere in Form von blechförmigen Streben ausgeführt. Diese geometrische Form ist vorteilhaft für die auftretenden Belastungen besonders gut geeignet. Für die Stabilität des Rahmens kann der innere Steg gerade, gebogen oder in einer anderen Form innerhalb des äußeren Rings angeordnet sein.

In einer bevorzugten Ausführungsform ist das Rührwerkzeug mit Mitteln ausgestattet, an die ein Antrieb angreifen kann, um das Rührwerkzeug in Bewegung, insbesondere in Rotation zu versetzen. Der Antrieb ist vorzugsweise der Antrieb des Küchengeräts.

### Kurzbeschreibung der Zeichnungen

Weitere vorteilhafte Ausgestaltungen werden nachfolgend an Hand von in den Zeichnungen dargestellten Ausführungsbeispielen, auf welche die Erfindung jedoch nicht beschränkt ist, näher beschrieben.

Es zeigen schematisch:
- Fig. 1A: eine perspektivische Ansicht eines Rührwerkzeugs mit einer Halteeinrichtung, einem elastischen Funktionsbereich und einem Rahmen;
- Fig. 1B: Die Darstellung eines Tintenfischs mit Flossen, die eine wellenförmige Kontur aufweisen;
- Fig. 2A: das Rührwerkzeug nach Fig. 1 in einer Seitenansicht;
- Fig. 2B: das Rührwerkzeug nach Fig. 1A in einer Schnittdarstellung der Seitenansicht nach Fig. 2A; und
- Fig. 3: eine Draufsicht auf das Rührwerkzeug nach Fig. 1.

### Ausführliche Beschreibung anhand von Ausführungsbeispielen

Bei der nachfolgenden Beschreibung bevorzugter Ausführungsformen der vorliegenden Erfindung bezeichnen gleiche Bezugszeichen gleiche oder vergleichbare Komponenten.

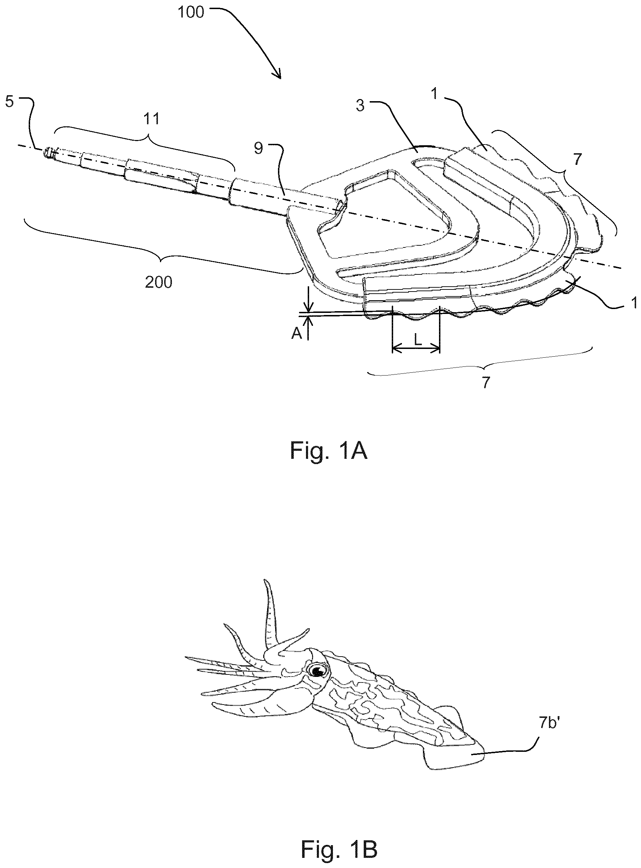

In Fig. 1A ist ein beispielhaftes Rührwerkzeug 100 mit einer Halteeinrichtung 200, einem elastischen Funktionsbereich 1 und einem Rahmen 3 dargestellt.

Der elastischen Funktionsbereich 1 ist zweigeteilt, jeweils auf einer Seite des Rahmens 3, bezogen auf die Mittelachse 5 der Halteeinrichtung 200, des Rahmens 3 und des gesamten Rührwerkzeugs 100. Der elastische Funktionsbereich 1 weist jeweils auf einer Seite fünf Wellen einer wellenförmigen Kontur 7 auf. Die Wellen sind charakterisiert durch ihre Amplitude A und ihre Wellenlänge L.

Die Anzahl von jeweils fünf Wellen auf jeder Seite des Rührwerkzeugs ist rein exemplarisch in diesem Ausführungsbeispiel gewählt. Ebenso umfassen erfindungsgemäße Ausführungsformen eine wellenförmige Kontur nur auf einer Seite des Rührwerkzeugs mit fünf, drei, zehn oder einer beliebigen anderen Anzahl an Wellen. Weiterhin können fünf, drei, zehn oder eine andere beliebige Anzahl von Wellen auf beiden Seiten des Rührwerkzeugs angeordnet sein, wobei die Anzahl der Wellen auf den beiden Seiten gleich oder unterschiedlich sein kann.

Der elastische Funktionsbereich 1 ist an dem Rahmen 3 durch einen schlauchförmigen Bereich, der einen Abschnitt des Rahmens umschließt, befestigt. Der schlauchförmige Bereich kann im Spritzgussverfahren zu Beispiel durch Umspritzen dieses Abschnitts des Rahmens befestigt werden. Dazu wird der Rahmen in eine Spritzgussform eingelegt und der genannte Bereich wird mit dem gewünschten Material umspritzt. Der Funktionsbereich 1 ist einstückig mit dem schlauchförmigen Bereich. Beide Bereiche bestehen aus dem gleichen Silikonmaterial.

Die Halteeinrichtung 200 weist eine Buchse 9 und einen Schaft 11 auf. Die Buchse 9 verbindet den Schaft 11 mit dem Rahmen 3 mittels einer axialen Nutverbindung. Der Schaft 11 ist in eine Innenlochbohrung der Buchse 9 hineingeschoben und kann beispielsweise mittels einer Klebung oder mittels Löten dauerhaft fixiert werden. Der Schaft 11 weist an seinem axialen Ende, welches entgegensetzt zur Verbindung mit der Buchse liegt, einen Ansatz auf, mit dem der Schaft 11 und letztlich das gesamte Rührwerkzeug 100 in einem Küchengerät (hier nicht dargestellt) wieder lösbar fixiert werden kann. In dem Mittelteil des Schaftes 11 ist eine eckige oder kantige Struktur zu erkennen, mit der beispielsweise eine Verdrehsicherung oder Fixierung in Umfangsrichtung erreicht werden kann, um das Rührwerkzeug 100 in Rotation zu versetzen.

Der Rahmen 3 weist neben einem äußeren Ring 13 einen inneren Steg 15 auf, mit dem das gesamte Rührwerkzeug 100 für die Rotationsbewegung in einem fließfähigen Gut eine verbesserte Stabilität gegenüber einem Rahmen 3 ohne inneren Steg 15 erzielt.

In Fig. 1B ist ein Tintenfisch dargestellt, dessen Flossen eine wellenförmige Kontur 7' ähnlich der wellenförmigen Kontur 7 des erfindungsgemäßen Rührwerkzeugs aufweist. Die Erfinder vermuten, dass Effekte, die bei dem Tintenfisch zu einer effizienten Bewegung im Wasser beitragen, bei der Erfindung zur Verbesserung des Rührergebnisses beitragen.

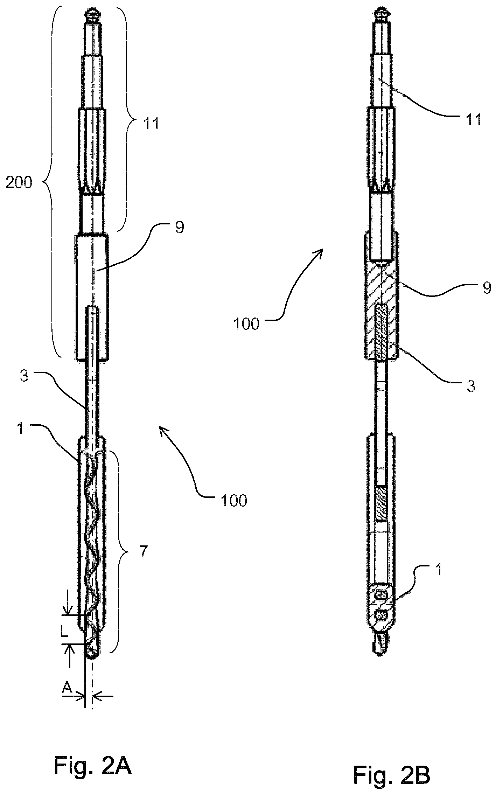

Fig. 2A zeigt das Rührwerkzeug 100 nach Fig. 1 in einer Seitenansicht. Im unteren Teil der Ansicht ist der elastische Funktionsbereich 1 mit der wellenartigen Kontur 7 dargestellt. Die Wellenlängen L sind gleichmäßig verteilt, aufgrund der seitlichen Darstellung werden die tatsächlich schräg angeordneten Wellen verzerrt dargestellt und erscheinen ungleichförmig mit unterschiedlich langen Wellenlängen.

Weiterhin ist der Rahmen 3 und die Halteeinrichtung 200 mit der Buchse 9 und dem Schaft 11 dargestellt.

Fig. 2B zeigt das Rührwerkzeug 100 nach Fig. 1 in einer Schnittdarstellung der Seitenansicht nach Fig. 2A.

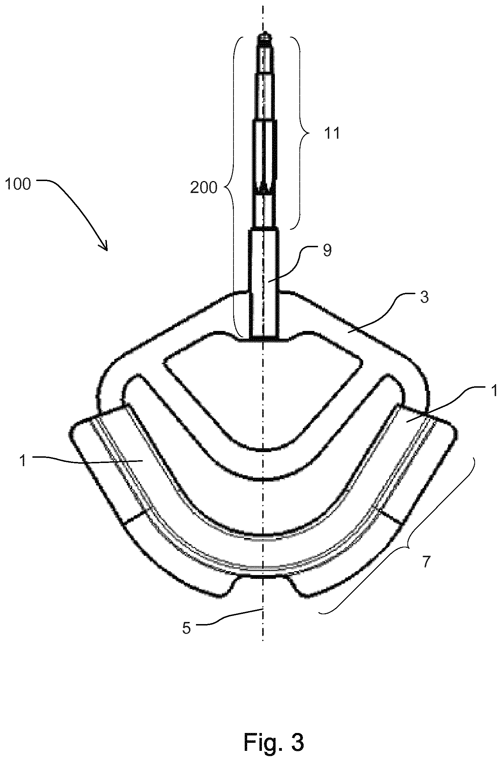

Fig. 3 zeigt eine Aufsicht auf das Rührwerkzeug 100 nach Fig. 1 mit dem Rahmen 3 sowie der Halteeinrichtung 200 mit der Buchse 9 und dem Schaft 11.

In der Aufsicht in Fig. 3 sind die Wellen der wellenförmigen Kontur 7 nicht erkennbar, weil die Amplitude der wellenförmigen Kontur in dieser beispielhaften Ausführung der Erfindung lediglich eine Komponente in Richtung der Flächennormalen des Rahmens 3 aufweist.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Aufgrund der erfindungsgemäßen wellenförmigen Kontur des elastischen Funktionsbereichs des Rührwerkzeugs ermöglicht die Erfindung ein verbessertes Rührergebnis. Mittels der erfindungsgemäßen wellenförmigen Kontur können zu mischende Zutaten für einen Teig vorteilhaft gleichmäßige verrührt oder vermischt werden. Die Erfinder vermuten, dass durch die Erfindung lokale Turbulenzen in dem Mischgut erzeugt werden können, die zu einer verbesserten Durchmischung von Zutaten oder Bestandteilen des Mischguts beitragen. Ebenfalls erreichbar ist eine verbesserte Funktionalität zum Abstreifen und Rühren von fließfähigem Gut in einem Rührbehälter eines Küchengerätes. Insbesondere kann die erfindungsgemäße wellenförmige Kontur ein verbessertes Abstreifen von Teigresten von den Wänden eines Rührbehälters bewirken. Schließlich ist die erfindungsgemäße Kontur auch ästhetisch angenehm und kann selbst nach längerem Gebrauch erhalten bleiben.

### Bezugszeichenliste

- 100: Rührwerkzeug
- 200: Halteeinrichtung

- A: Amplitude einer Welle der wellenartigen Kontur
- L: Wellenlänge einer Welle der wellenartigen Kontur

- 1: elastischer Funktionsbereich
- 3: Rahmen
- 5: Mittelachse
- 7: wellenförmige Kontur
- 7': Flosse eines Tintenfischs
- 9: Buchse
- 11: Schaft
- 13: äußerer Ring des Rahmens
- 15: innerer Steg des Rahmens

## Patentansprüche

1. Rührwerkzeug (100) für ein Küchengerät, wobei das Rührwerkzeug (100) eine Halteeinrichtung (200), einen Rahmen (3) und einen elastischen Funktionsbereich (1) aufweist, wobei der elastische Funktionsbereich (1) mit dem Rahmen (3) verbunden ist, und das Rührwerkzeug (100) zum Rühren von fließfähigem Gut und/oder zum Abstreifen des fließfähigen Guts von Flächen vorgesehen und/oder geeignet ist,
**dadurch gekennzeichnet, dass**
der elastische Funktionsbereich (1), vor einer nutzungsgemäßen Erstbenutzung des Rührwerkzeugs, eine wellenförmige Kontur (7) aufweist, und wenigstens eine Komponente der Amplitude (A) der wellenförmigen Kontur (7) in Richtung der Flächennormalen des angrenzenden Teils des Rahmens (3) ausgebildet ist.

2. Rührwerkzeug (100) nach Anspruch 1, **dadurch gekennzeichnet, dass** die Amplitude (A) der wellenförmigen Kontur (7) entlang des gesamten Verlaufs der Kontur einheitlich ist.

3. Rührwerkzeug (100) nach einem der vorherigen Ansprüche, **dadurch gekennzeichnet, dass** das Verhältnis von Wellenlänge zu Amplitude zwischen 20:1 und 2:1 ist.

4. Rührwerkzeug (100) nach einem der vorherigen Ansprüche, **dadurch gekennzeichnet, dass** die Wellenlängen (L) der wellenförmigen Kontur (7) entlang des gesamten Verlaufs der Kontur einheitlich ist.

5. Rührwerkzeug (100) nach einem der vorherigen Ansprüche, **dadurch gekennzeichnet, dass** die wellenförmige Kontur (7) in wenigstens zwei voneinander getrennte Abschnitte unterteilt ist.

6. Rührwerkzeug (100) nach einem der vorherigen Ansprüche, **dadurch gekennzeichnet, dass** die wellenförmige Kontur (7) wenigstens zehn Wellen aufweist.

7. Rührwerkzeug (100) nach einem der vorherigen Ansprüche, **dadurch gekennzeichnet, dass** der elastische Funktionsbereich (1) Silikon aufweist oder aus Silikon hergestellt ist.

8. Rührwerkzeug (100) nach einem der vorherigen Ansprüche, **dadurch gekennzeichnet, dass** die Halteeinrichtung (200) und/oder der Rahmen (3) Metall aufweist oder aus Metall hergestellt ist.

9. Rührwerkzeug (100) nach einem der vorherigen Ansprüche, **dadurch gekennzeichnet, dass** die Halteeinrichtung (200) einen Schaft (11) und eine Buchse (9) aufweist, wobei die Buchse (9) mit dem Rahmen (3) und mit dem Schaft (11) verbunden ist und der Schaft (11) mit dem Küchengerät verbindbar ausgestaltet ist.

10. Rührwerkzeug (100) nach einem der vorherigen Ansprüche, **dadurch gekennzeichnet, dass** der Rahmen (3) einen äußeren Ring (13) und einen inneren Steg (15) aufweist.

11. Rührwerkzeug (100) nach einem der vorherigen Ansprüche, **dadurch gekennzeichnet, dass** das Rührwerkzeug (100) mit Mitteln ausgestattet ist, an die ein Antrieb angreifen kann, um das Rührwerkzeug (100) in Bewegung zu versetzen.

## Claims

1. Stirring tool (100) for a kitchen appliance, wherein the stirring tool (100) comprises a retaining device (200), a frame (3), and an elastic functional region (1), wherein the elastic functional region (1) is connected to the frame (3), and the stirring tool (100) is provided and/or is suitable for stirring flowable material and/or for scraping off the flowable material from surfaces,
**characterised in that**
the elastic functional region (1) has a wave-shaped contour (7) before initial use of the stirring tool in accordance with usage, and at least one component of the amplitude (A) of the wave-shaped contour (7) is embodied in the direction of the surface normal of the adjacent part of the frame (3).

2. Stirring tool (100) according to claim 1, **characterised in that** the amplitude (A) of the wave-shaped contour (7) is uniform along the entire course of the contour.

3. Stirring tool (100) according to one of the preceding claims, **characterised in that** the ratio of wavelength to amplitude is between 20:1 and 2:1.

4. Stirring tool (100) according to one of the preceding claims, **characterised in that** the wavelength (L) of the wave-shaped contour (7) is uniform along the entire course of the contour.

5. Stirring tool (100) according to one of the preceding claims, **characterised in that** the wave-shaped contour (7) is divided into at least two separate sections.

6. Stirring tool (100) according to one of the preceding claims, **characterised in that** the wave-shaped contour (7) comprises at least ten waves.

7. Stirring tool (100) according to one of the preceding claims, **characterised in that** the elastic functional region (1) comprises silicone or is made of silicone.

8. Stirring tool (100) according to one of the preceding claims, **characterised in that** the holding device (200) and/or the frame (3) comprises metal or is made of metal.

9. Stirring tool (100) according to one of the preceding claims, **characterised in that** the holding device (200) has a shaft (11) and a connector (9), wherein the connector (9) is connected to the frame (3) and to the shaft (11) and the shaft (11) is configured so as to be connectable to the kitchen appliance.

10. Stirring tool (100) according to one of the preceding claims, **characterised in that** the frame (3) has an outer ring (13) and an inner web (15).

11. Stirring tool (100) according to one of the preceding claims, **characterised in that** the stirring tool (100) is provided with means onto which a drive can engage in order to set the stirring tool (100) in motion.

## Revendications

1. Outil mélangeur (100) destiné à un appareil de cuisine, dans lequel l'outil mélangeur (100) présente un dispositif de retenue (200), un cadre (3) et une région fonctionnelle élastique (1), dans lequel la région fonctionnelle élastique (1) est reliée au cadre (3), et l'outil mélangeur (100) est prévu et/ou est approprié pour mélanger un produit fluide et/ou pour racler du produit fluide afin de l'ôter d'une surface,
**caractérisé en ce que**
la région fonctionnelle élastique (1), avant une première utilisation conforme de l'outil mélangeur, présente un contour ondulé (7), et au moins un élément constitutif de l'amplitude (A) du contour ondulé (7) est réalisé dans la direction de la normale de la partie adjacente du cadre (3).

2. Outil mélangeur (100) selon la revendication 1, **caractérisé en ce que** l'amplitude (A) du contour ondulé (7) est homogène le long de la totalité du tracé du contour.

3. Outil mélangeur (100) selon l'une quelconque des revendications précédentes, **caractérisé en ce que** le rapport de la longueur d'ondulation sur l'amplitude est compris entre 20:1 et 2:1.

4. Outil mélangeur (100) selon l'une quelconque des revendications précédentes, **caractérisé en ce que** la longueur d'ondulation (L) du contour ondulé (7) est homogène le long de la totalité du tracé du contour.

5. Outil mélangeur (100) selon l'une quelconque des revendications précédentes, **caractérisé en ce que** le contour ondulé (7) est divisé en au moins deux sections séparées l'une de l'autre.

6. Outil mélangeur (100) selon l'une quelconque des revendications précédentes, **caractérisé en ce que** le contour ondulé (17) présente au moins dix ondulations.

7. Outil mélangeur (100) selon l'une quelconque des revendications précédentes, **caractérisé en ce que** la région fonctionnelle élastique (1) présente du silicone ou est fabriquée à partir de silicone.

8. Outil mélangeur (100) selon l'une quelconque des revendications précédentes, **caractérisé en ce que** le dispositif de retenue (200) et/ou le cadre (3) présente du métal ou est fabriqué à partir de métal.

9. Outil mélangeur (100) selon l'une quelconque des revendications précédentes, **caractérisé en ce que** le dispositif de retenue (200) présente une tige (11) et un manchon (9), dans lequel le manchon (9) est relié au cadre (3) et à la tige (11), et la tige (11) est conçue comme pouvant être reliée à l'appareil de cuisine.

10. Outil mélangeur (100) selon l'une quelconque des revendications précédentes, **caractérisé en ce que** le cadre (3) présente un anneau extérieur (13) et une entretoise intérieure (15).

11. Outil mélangeur (100) selon l'une quelconque des revendications précédentes, **caractérisé en ce que** l'outil mélangeur (100) est équipé d'un moyen au niveau duquel un entraînement peut venir en prise afin de mettre en mouvement l'outil mélangeur (100).
